# EUROPEAN PATENT APPLICATION

(11) **EP 2 229 912 A1**
(43) Date of publication of application: **22.09.2010**
(21) Application number: 07866338.2
(22) Date of filing: 03.12.2007
(51) Int. Cl.: A61C 8/00

(54) **DENTAL IMPLANT**

(30) Priority: 30.11.2007 ES 200703188
(71) Applicant: Garcia Saban, Juan Carlos, 08211 Castellar del Valles, Barcelona (ES); Garcia Saban, Francisco Javier, 08211 Castellar del Valles, Barcelona (ES); Garcia Saban, Miguel Angel, 08211 Castellar del Valles, Barcelona (ES)
(72) Inventor: Garcia Saban, Juan Carlos, 08211 Castellar del Valles, Barcelona (ES); Garcia Saban, Francisco Javier, 08211 Castellar del Valles, Barcelona (ES); Garcia Saban, Miguel Angel, 08211 Castellar del Valles, Barcelona (ES)
(74) Representative: Carpintero Lopez, Francisco
(86) International application number: PCT/ES2007/000708
(87) International publication number: WO 2009/068699

(57) **Abstract**

The invention relates to a dental implant which is used to support and secure the prosthetic elements replacing original teeth and especially indicated for situations with aesthetic compromise and reduced available space due to the presence of adjacent teeth or due to the geometry of the bone, which basically comprises a threaded central body (2) and a platform (1) having a diameter comprised between 3.1 and 3.5 mm with a conical outer and inner shape, which platform extends by means of a threaded hole (4) for retaining a pier (3) for attachment to the prosthesis.

## Description

### Object of the Invention

As indicated in the title, the present invention patent consists of a threaded type dental implant of those serving to support and secure the prosthetic elements replacing original teeth.

More specifically, the object of the invention is a dental implant for situations with aesthetic compromise and reduced available space due to the presence of adjacent teeth or due to the geometry of the available bone.

### Background of the Invention

Dental implantology techniques are currently widespread, their use and acceptance by both professionals and patients being common. Said techniques allow replacing tooth roots by means of implants to which the corresponding prostheses are in turn coupled.

The phases of the implantation of said implants are generally summarized in:
1) Initial phase of implantation;
2) Immediate subsequent phase once the osseointegration time has elapsed, in which step said stability must be such that it prevents the rotation of the implant; and
3) Step of fixing the prosthesis and setting the implant to work.

Thus, the implants used must meet a series of requirements satisfying the needs and demands of each of these steps.

In the case of the first of them, the step of implantation, said implants are required to have a shape and structure such that they can be implanted, either at crestal or supracrestal level, in an easy and comfortable manner for the specialist, meeting in turn the design requirements which will provide a correct osseointegration, fixing of the prosthesis, as well as strength, durability, etc.

There are occasions, however, in which the conditions of said implantation are especially demanding, such as those in which there is a lack of bone in which to fix the implant, a situation which is usual when, for example, the teeth to be replaced are the upper lateral or lower incisors, in which the mentioned lack of bone is added to the closeness of the adjacent teeth.

On said occasions, the sets of implants normally used, which have diameters of the platform or head as well as of the threaded body close to 4 mm, are shown to be rather unsuitable or even non-usable.

### Description of the Invention

The implant of the invention described below solves the previously mentioned drawbacks, providing an implant which gives a suitable response to all the requirements demanded for it in each of the steps of its implantation and is furthermore able to be implanted in conditions of little available bone structure and/or considerable closeness of the adjacent teeth.

To that end, the threaded implant of the invention is structured from a body formed by a platform or head and a threaded body, both having reduced diameters.

More specifically, the implant of the invention is structured such that its platform or head, i.e., its area of connection with the corresponding pier for attachment to the prosthesis has a diameter comprised between 3.1 and 3.5 mm.

On the other hand, the outer diameter of the threaded body will be comprised between 3.0 and 3.4 mm such that it allows performing the following restorations with sufficient assurances:
- Restorations by means of removable prostheses or overdentures fixed to the implants by means of a retaining system allowing their removal by the patient and located in the anteroinferior region, a region of reduced vestibulolingual bone width, i.e., in the tongue-lip axis.
- Restorations of unitary crowns in upper lateral or lower incisors in which there is a reduced mesiodistal width.
- Restorations of lower incisors in cases of reduced bone width.

### Description of the Drawings

To complement the description which is being made and for the purpose of aiding to better understand the features of the invention according to a preferred practical embodiment thereof, a set of drawings is attached as an integral part of said description, in which the following has been depicted with an illustrative and non-limiting character:
Figure 1 shows a schematic plan and elevational partial cut-away view of the implant of the invention with a coupled pier.

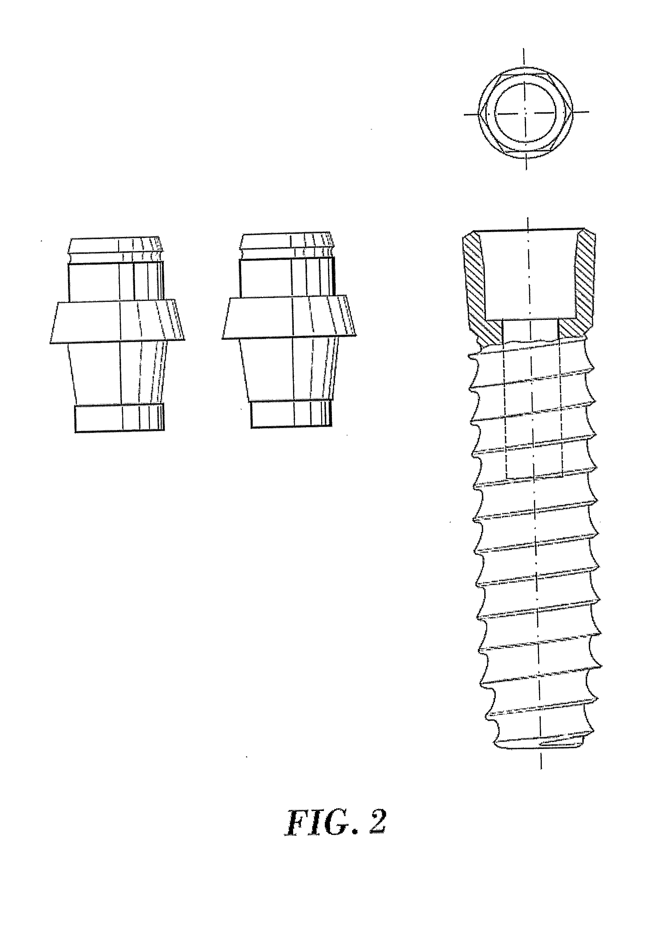

Figure 2 shows a schematic plan and elevational partial cut-away view of the implant of the invention without a coupled pier.

### Preferred Embodiment of the Invention

In view of the figures, an embodiment of the implant of the invention can be observed therein which basically consists of a platform (1) and a threaded central body (2), the latter being able to be finished at the lower part in a conical apical tip.

As can be seen in the figures, said platform (1) has a conical outer shape, in the inside of which there is defined a first also conical cavity (5), aligned at its center with the axial axis of the implant and a second cavity (6) which is hexagonal in plan view, which second cavity (6) extends in turn by means of a threaded hole (4) which is also aligned with respect to said axial axis of the implant for retaining the screw of the pier (3) to the prosthesis.

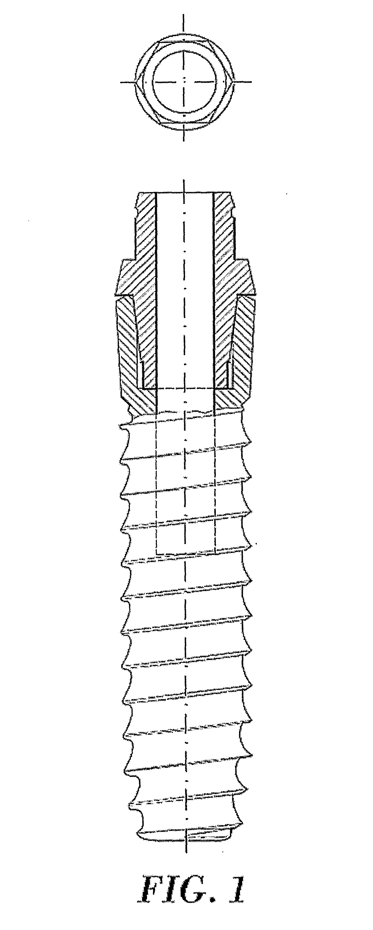

As can also be observed in the figures, especially in Figure 1, a pier (3) is coupled in the conical cavity of the mentioned platform (1), according to a preferred embodiment of the invention by means of a conical inner connection under friction with a through bolt, such that the mentioned pier (3) and the implant are attached by both the screwed attachment of the threaded hole (4) and by the friction-fitting between the first inner conical cavity (5) of the platform (1) of the implant and an also conical part of the pier (3). This friction-fitting is preferably performed by means of applying a torque force to the screw attaching the mentioned pier (3) and implant between 0.15 to 0.35 Nm.

In the event that said pier (3) is of the anti-rotation type, i.e., its base has a hexagonal section, said hexagonal base will fit in the second cavity (6), which is also hexagonal in plan view, of the platform (1) such that once the implant and the pier (3) are coupled the rotational movements of the latter are blocked.

Furthermore, for the purpose of being implanted in conditions of little available bone structure and/or considerable closeness of the adjacent teeth, the platform (1) of the implant has a maximum diameter comprised between 3.1 and 3.5 mm, since it has been verified that diameters above 3.5 mm are too large to be implanted in the indicated conditions and if they are less than 3.1 mm it is virtually impossible to place an element of connection between the pier (3) and the implant due to the small size. Preferably, and according to an embodiment of the invention, it has been verified that the best response-operational efficiency ratio is obtained when the diameter is between 3.2 and 3.4 mm.

On the other hand, according to a possible embodiment of the invention the point of the largest outer diameter of the threaded central body (2) will be comprised between 3.0 and 3.4 mm, and according to a preferred embodiment which corresponds to the best balance between structural strength-operational efficiency-handling, between 3.2 and 3.3 mm.

According to a possible embodiment of the invention, an optimal combination of diameters between the platform (1) and the threaded central body (2) which, on one hand, allows obtaining a suitable functionality in areas of reduced bone structure and, on the other hand, allows the handling by the specialist, is that in which the point of the largest diameter of the platform (1) is 3.2 mm and that of the threaded central body (2) is 3.3 mm.

## Claims

1. Dental implant comprising a platform (1) on which there is fixed a pier (3) for attachment to the prosthesis and a threaded central body (2), **characterized in that** the diameter of the platform (1) is comprised between 3.1 and 3.5 mm.

2. Dental implant according to claim 1, **characterized in that** the diameter of the platform (1) is comprised between 3.2 and 3.4 mm.

3. Dental implant according to claim 1 or 2, **characterized in that** the diameter of the threaded central body (2) is comprised between 3.0 and 3.4 mm.

4. Dental implant according to claim 3, **characterized in that** the diameter of the threaded central body (2) is comprised between 3.2 and 3.3 mm.

5. Dental implant according to any of the previous claims, **characterized in that** the diameter of the platform (1) is 3.2 mm and that of the threaded central body (2) is 3.3 mm.

6. Dental implant according to claim 1, **characterized in that** the platform (1) has a conical outer shape.

7. Dental implant according to claim 1 or 6, **characterized in that** in the inside of the platform (1) there is defined a first conical cavity (5), aligned at its center with the axial axis of the implant and a second cavity (6) which is hexagonal in plan view, which second cavity (6) extends in turn by means of a threaded hole (4) which is also aligned with respect to said axial axis.

8. Dental implant according to claim 7, **characterized in that** the pier (3) is fixed to the platform (1) by means of a conical connection under friction with a through bolt, such that the mentioned pier (3) and the implant are attached by both the screwed attachment of the threaded hole (4) and by the friction-fitting between the first inner conical cavity (5) of the platform (1) of the implant and an also conical part of the pier (3).

9. Dental implant according to claim 1, **characterized in that** the threaded central body (2) is finished at the lower part in a conical apical tip.
